# EUROPEAN PATENT SPECIFICATION

(11) **EP 1 685 943 B1**
(45) Date of publication and mention of the grant of the patent: **18.08.2010**
(21) Application number: 05011906.4
(22) Date of filing: 02.06.2005
(51) Int. Cl.: B29C 47/22

(54) **An extrusion head for blow moulding of hollow bodies with a system for distribution of the thickness of the walls of the parison**
Extrusionskopf zum Blasformen von Hohlkörpern mit einer Verteiler-Anordnung für die Wanddicke eines Vorformlings
Tête d'extrusion pour moulage par soufflage d'objets creux avec système de distribution de l'épaisseur de la paroi d'une paraison

(30) Priority: 27.01.2005 IT MI20050110
(43) Date of publication of application: 02.08.2006
(73) Proprietor: Uniloy Milacron S.R.L., 20013 Magenta (MI) (IT)
(72) Inventor: Bertolotti, Gianluca, 20080 Ozzero (MI) (IT)
(74) Representative: Coggi, Giorgio

(56) References cited:
- EP-A1- 0 478 957
- EP-A1- 1 004 423
- DE-A1- 2 915 691
- DE-U1- 9 112 621

## Description

The present invention relates to the sector of machines for blow moulding of polymeric materials with an extrusion head according to claim 1 and 8.

One of the major problems that are encountered in the blow moulding of hollow bodies is the correct radial distribution of the polymer that forms the final piece. Said problem is much more evident whenever the piece produced does not present cylindrical symmetry, or else when the radii of radiusing of the bottom of the blown product are small.

In fact, when a tubular parison having a constant thickness is blown within the mold, it is found that the semi-molten material distributes in a non-uniform way in the mold. As a result, the final piece will present some portions of wall that are excessively thin and other portions of wall that are excessively thick. To guarantee a certain dimensional stability and strength of the finished piece, it is necessary to increase the weight of the product to obtain a larger thickness in all the walls, with the result of an excessive waste of material.

In order to solve at least in part said drawbacks systems are known, such as the one described in EP 1.004.423 filed in the name of Feuerherm Harald, which intervene in the formation of the parison within the extrusion head to obtain from the head a parison deformed in a pre-set direction. In this way, the subsequent blow moulding of the parison distributes the thicknesses of the walls evenly. The deformation of the parison is obtained by intervening on the mandrel or male set within the extrusion head, namely by replacing the mandrel or by causing deformation of the outer skirt of the mandrel by means of purposely provided plates.

DE 91 12 621 U1 discloses according to the preamble of claim 1 an extrusion head for blow moulding of hollow bodies comprising.
- a body defining within it a cylindrical chamber;
- a cylindrical force plug, set axially within the cylindrical chamber of the body;
- a die opening set at the bottom end of the body, a bottom part of the force plug being set within said die opening, said bottom part of the force plug defining within it an chamber open downwards; and,
- a plunger, supporting at the bottom an insert, slidably mounted axially within the open downwards chamber.

The purpose of the present invention is to eliminate the drawbacks of the known art by providing an extrusion head for blow moulding of hollow bodies that will enable a uniform distribution of the thickness in the walls of the blown piece to be guaranteed.

Another purpose of the invention is to provide such an extrusion head that will be extremely versatile and designed to be used for different types of production without any need for structural changes.

The above purposes are achieved according to the invention with the extrusion head, the characteristics of which are listed in the annexed independent Claim 1.

Advantageous embodiments of the invention appear in the dependent claims.

The extrusion head for blow moulding of hollow bodies according to the invention comprises a body defining within it a substantially cylindrical chamber. Axially set within the chamber of the body is a force plug having a substantially cylindrical shape so as to define a cylindrical gap between the outer side surface of the male or mandrel and the inner side surface of the body, through which the molten plastic material fed by an extruder can flow.

A die opening is set at the bottom end of the body to define the conformation of the outer side surface of the parison.

A bottom part of the male is set within the die opening so as to define an annular gap communicating with the first cylindrical gap for exit of the tubular parison from the extrusion head.

The main characteristic of the invention according to the characterizing part of claim 1 is represented by the fact that the extrusion head further comprises a plunger supporting, at the bottom, an ovalizing insert. The plunger is slidably mounted axially within a chamber formed in the bottom part of the male and open downwards. In this way, the plunger can move from a retracted, resting, position, in which the bottom edge of the ovalizing insert is located within the chamber of the bottom part of the male, to an extracted, working, position, in which the bottom edge of the ovalizing insert projects at the bottom with respect to the bottom edge of the bottom part of the male.

In this way, the bottom edge of the ovalizing insert that projects at the bottom from the bottom part of the male enables adjustment of the radial distribution of the internal surface of the polymer. Since the bottom edge of the ovalizing insert is asymmetrical,. whereas the bottom edge of the die opening is symmetrical, there will be an appropriate distribution of the thickness of the parison, in compliance with the production requirements and the subsequent process of blow moulding in the mold.

The advantages of the invention are clearly evident in that it enables, via control of the movement of the plunger, adjustment of the travel of the ovalizing insert in conformance with the production requirements.

Further characteristics of the invention will emerge more clearly from the ensuing detailed description, with reference to its embodiments, which are provided purely by way of non-limiting example and are illustrated in the annexed drawings, wherein:
Figure 1 is the layout in side elevation of a complete extrusion head according to the invention;
Figure 1A is an enlarged detail enclosed in the circle A of Figure 1;
Figure 2 is a plan view from beneath of the die opening of the extrusion head of Figure 1;
Figure 3 is an axial cross-sectional view taken according to the sectional plane III-III of Figure 2 of the die opening of the extrusion head of Figure 1;
Figure 3A is an enlargement of the detail enclosed in the circle A of Figure 3;
Figure 4 is a bottom plan view of an ovalizing insert of the extrusion head of Figure 1;
Figure 5 is a side view of the ovalizing insert of Figure 4;
Figure 5A is a side view of the ovalizing insert taken according to the direction of the arrow A of Figure 5;
Figure 6 is a side view of the bottom part of the head of Figure 1, when the male of the extrusion head is in the raised, working, position and the plunger of the ovalizing insert is in the retracted, resting, position;
Figure 6A is an enlargement of the detail enclosed in the circle A of Figure 6;
Figure 7 is an axial cross-sectional view taken according to the sectional plane VII-VII of Figure 6;
Figure 7A is an enlargement of the detail enclosed in the circle A of Figure 7;
Figure 8 is a side view of the bottom part of the head of Figure 1, when the male of the extrusion head is in the raised, working, position and the plunger of the ovalizing insert is in the extracted, working, position;
Figure 8A is an enlargement of the detail enclosed in the circle A of Figure 8;
Figure 9 is an axial cross-sectional view taken according to the sectional plane IX-IX of Figure 8;
Figure 9A is an enlargement of the detail enclosed in the circle A of Figure 9;
Figure 10 is a side view of the bottom part of the head of Figure 1, when the force plug of the extrusion head is in the lowered, resting, position and the plunger of the ovalizing insert is in the retracted, resting, position;
Figure 10A is an enlargement of the detail enclosed in the circle A of Figure 10;
Figure 11 is an axial cross-sectional view taken according to the sectional plane XI-XI of Figure 10; and
Figure 11A is an enlargement of the detail enclosed in the circle A of Figure 11.

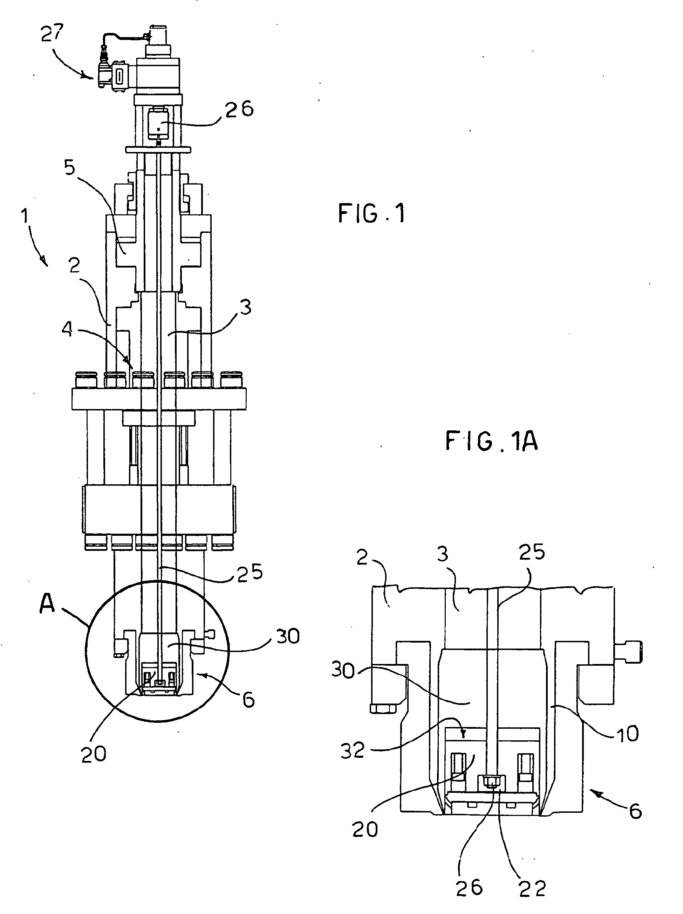

With reference now to Figure 1, illustrated therein is an extrusion head according to the invention, designated as a whole by the reference number 1. The extrusion head 1 has a substantially cylindrical body 2. A substantially cylindrical male 3 is axially set within the body 2.

Between the internal wall of the body 2 of the head and the external wall of the male 3 a cylindrical gap 4 is formed, through which the molten material fed into the head by an extruder (not shown) can flow downwards through a manifold 5 set within the head. In this way, the molten material in the cylindrical gap 4 assumes a substantially tubular shape.

Located at the bottom end of the head 1 is a die opening 6, set within which is the bottom part 30 of the male 3. According to the configuration of the die opening 6 and of the bottom part 30 of the male is the shape of the parison that must come out of the extrusion head 1 to be subsequently blown in the mold.

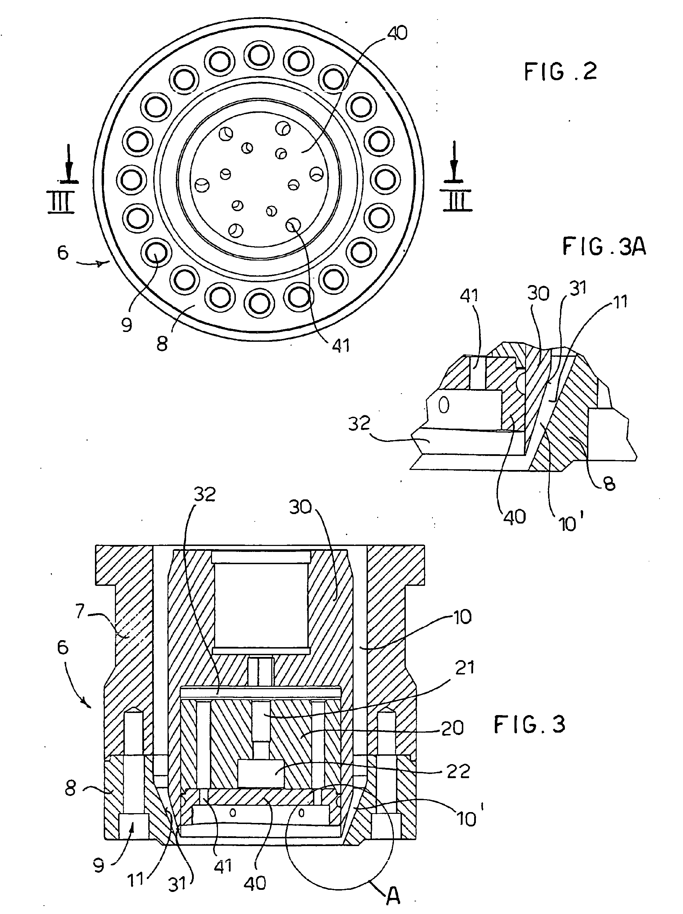

With reference also to Figures 1A, 2, 3 and 3A, the die opening 6 comprises a first, cylindrical, element 7, fixed to the body 2 of the extrusion head, and a second, annular, element 8, fixed to the cylindrical element 7 by means of fixing screws that engage in respective fixing holes 9 made in the cylindrical element 7 and in the disk-like element 8 of the die opening 6.

Defined between the outer side surface of the bottom part 30 of the male and the inner side surface of the cylindrical element 7 of the die opening is a cylindrical gap 10 communicating with the cylindrical chamber 4 for passage of the molten material. The cylindrical gap 10 is narrowed within the annular terminal element 8 of the die opening.

The annular element 8 has a tapered inner side surface 11 with an internal diameter that decreases downwards. Also the bottom end of the terminal element 30 of the male has a tapered outer side surface 31 with an internal diameter that decreases downwards. In this way, between the two tapered surfaces 11 and 31 a narrowing 10' of the cylindrical gap 10 is created.

Made in the bottom part 30 of the male 3 is a cylindrical chamber 32 open at the bottom. A plunger 20 can slide axially within the cylindrical chamber 32 of the male.

The plunger 20 has an axial hole 21 ending in a widened seat 22. With reference also to Figures 1 and 1A, a stem 25, the bottom end of which is fixed to the plunger 20 by means of a nut 26 housed in the seat 22 of the plunger 20, passes in the axial hole 21 of the plunger 20. As illustrated in Figure 1, the plunger 25 extends axially within the male 3; for said purpose, the male 3 must present an axial channel designed to enable passage of the stem 25 of the plunger.

The top end of the stem 25 is located in the top part of the extrusion head 1 and is connected to an actuator 26, which enables axial translation of the stem 25. The actuator 26 is controlled by a purposely provided controller 27.

Fixed to the bottom surface of the plunger 20 is an ovalizing insert 40. The ovalizing insert 40 has a plurality of fixing holes 41, designed to be aligned with fixing holes of the plunger for receiving fixing screws.

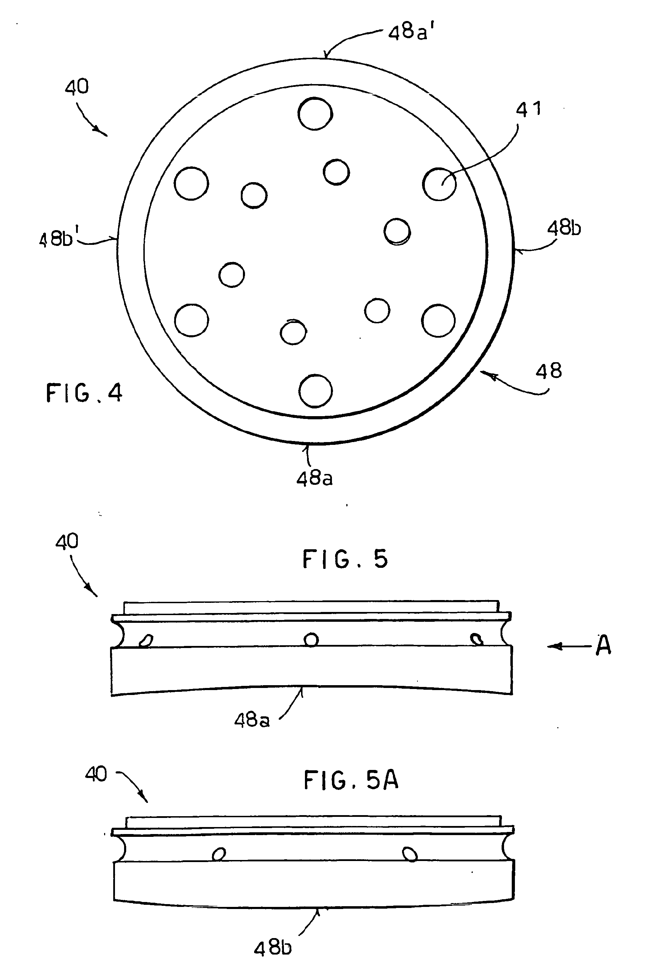

As illustrated in Figures 4, 5 and 5A, the ovalizing insert 40 has a substantially disk-like shape, with an external diameter substantially equal to that of the plunger 20 in order to be able to slide in the chamber 32 of the male. The outer bottom edge 48 of the ovalizing insert 40 has an asymmetrical profile and is divided into four portions of arc of circle 48a, 48b, 48a', 48b' subtending an angle at the centre of 90°. To be exact, as illustrated in Figures 5 and 5A, there are two portions of outer bottom edge with convex profile 48a, and 48a', arranged in diametrically opposite positions, and two portions of outer bottom edge with concave profile 48b, and 48b', arranged in diametrically opposite positions.

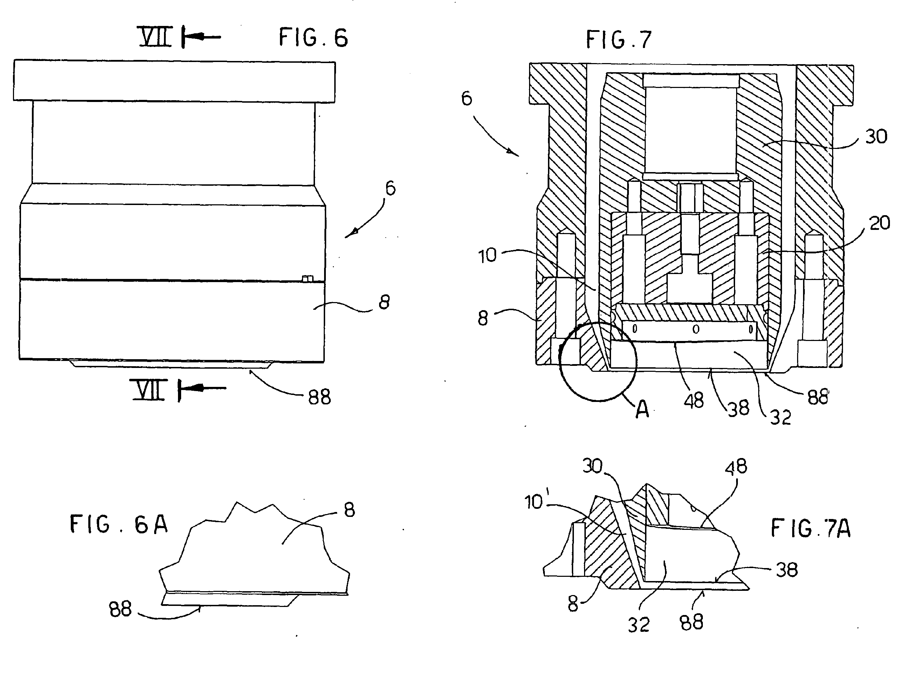

With reference to Figures 6, 6A, 7 and 7A, the plunger 20 is in its retracted, resting, position and the male 3 is in the lowered, working, position. In this situation, the plunger 20 is retracted within the chamber 32 of the bottom part 30 of the male and the bottom edge 48 of the ovalizing insert 40 does not project externally with respect to the bottom edge 38 of the bottom part 30 of the male. The male 3 is lifted, and the bottom part 30 of the male is within the die opening 6; consequently, the bottom edge 38 of the bottom part of the male does not project externally with respect to the bottom edge 88 of the die opening 6.

The molten material can pass through the narrowing 10' of the gap 10 so as to form, at output from the die opening 6, a tubular parison with substantially constant thickness, since both the bottom edge 38 of the male and the bottom edge 88 of the die opening 6 are circular and symmetrical. Consequently, no control over the thickness of the parison is performed.

If the aim is to perform a control over the thickness of the parison, the controller 27 (Figure 1) controls the actuator 26, which actuates the stem 25, thus causing a translation downwards of the plunger 20.

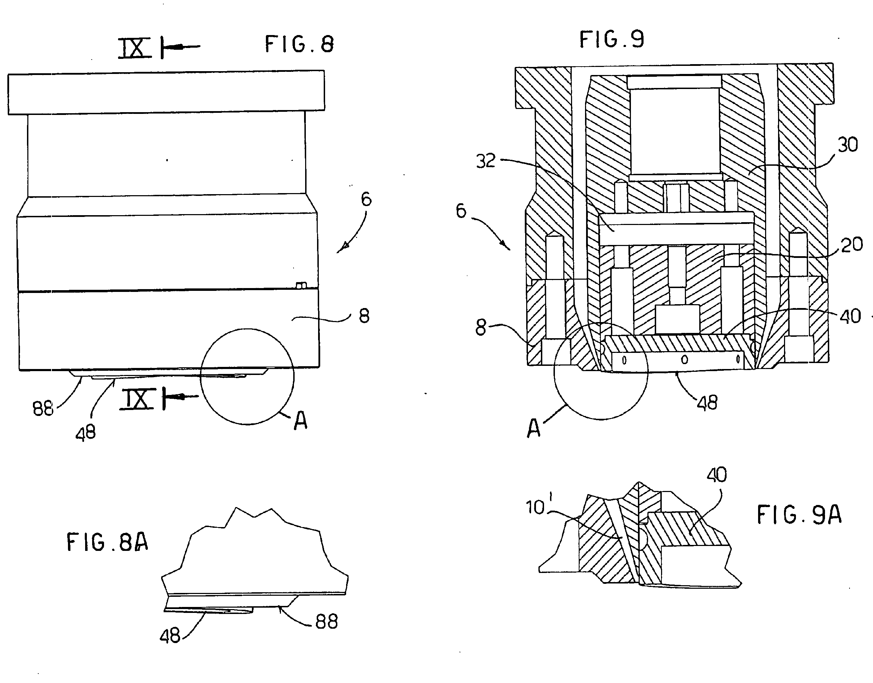

After said translation (see Figures 8, 8A, 9 and 9A), the plunger 20 is in its extracted, working, position, and also the bottom part 30 of the male is in the raised, working, position. In this situation, the bottom edge 48 of the ovalizing insert 40 projects externally downwards both with respect to the bottom edge 38 of the bottom part 30 of the male and with respect to the bottom edge 88 of the die opening 6.

The molten material can pass through the narrowing 10' of the gap 10; however, in this case, the internal surface of the molten material comes into contact with the outer bottom edge 48 of the ovalizing insert 40.

Since the outer bottom edge 48 of the ovalizing insert is asymmetrical and has convex portions 48a, 48a' and concave portions 48b, 48b', the internal surface of the parison at output from the die opening 6 is ovalized. As a result, the parison will have a larger thickness at the convex parts 48a, 48a' of the ovalizing insert 40 and a smaller thickness at the concave parts 48b, 48b' of the ovalizing insert.

Subsequently, when the parison with non-uniform thickness is blown in the mold, there will be an even distribution of the thickness of the side walls of the finished product.

It should be considered that the male 3 can translate axially within the head 1 to move from a raised, working, position, in which the narrowing 10' of the gap 10 is open for passage of the molten material, to a lowered, resting, position, in which the narrowing 10' of the gap 10 is closed so as to obstruct passage of the molten material outwards.

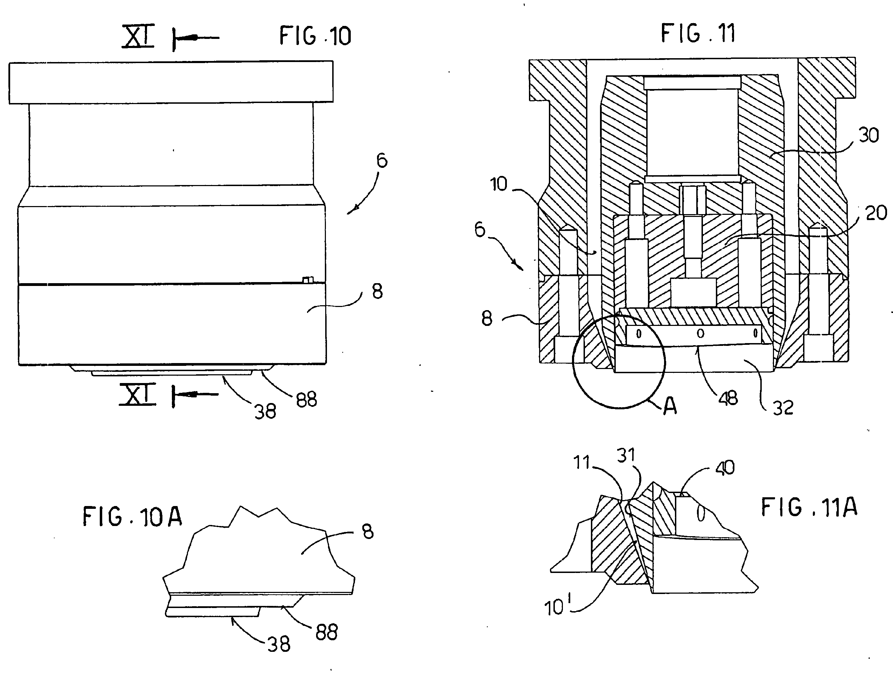

With reference to Figures 10, 10A, 11, 11A, when it is necessary to stop production, the plunger 20 is brought back into its retracted, resting, position within the chamber 32 of the bottom part 30 of the male, and the male 3 is actuated in translation downwards so as to bring the tapered outer wall 31 of the bottom part 30 of the male into contact with the tapered inner wall 32 of the die opening 6. In this way, the narrowing 10' of the gap 10 is closed, and the molten material cannot come out of the die opening 6.

It should be noted that in this situation the bottom edge 38 of the bottom part 30 of the male projects slightly downwards with respect to the bottom edge 88 of the bottom part 8 of the die opening 6.

## Claims

1. An extrusion head (1) for blow moulding of hollow bodies comprising:
- a body (2) defining within it a substantially cylindrical chamber;
- a force plug (3) having a substantially cylindrical shape and set axially within said cylindrical chamber of the body so as to define a cylindrical gap (4) between the outer side surface of the force plug and the inner side surface of the body, through which the molten plastic material fed by an extruder can flow;
- a die opening (6) set at the bottom end of the body (2); and
- a bottom part (30) of the force plug (3) set within said die opening (6) so as to define an annular gap (10) communicating with said cylindrical gap (4) for exit of the tubular parison from said extrusion head,
said extrusion head being **characterized in that** it comprises:
- a plunger (20) supporting at the bottom an ovalizing insert (40) having a substantially annular shape and its bottom edge (48) is asymmetrical, presenting portions with convex, profile (48a, 48a') and portions with concave profile (48b, 48b')
said plunger being slidably mounted axially within a chamber (32) formed in said bottom part (30) of the force plug and open downwards, so that said plunger can pass from a retracted, resting, position, in which the bottom edge (48) of the ovalizing insert is within said chamber (32) of the bottom part of the force at extracted, working, position, in which the bottom edge (48) of said ovalizing insert projects at the bottom with respect to the bottom edge (38) of said bottom part of the force plug.

2. The extrusion head (1) according to Claim 1, **characterized in that** said insert (40) has two portions with convex profile (48a, 48a') arranged in diametrically opposite positions and two portions with concave profile (48b, 48b') arranged in diametrically opposite positions.

3. The extrusion head (1) according to Claim 2, **characterized in that** each of said portions with convex and concave profiles (48a, 48a', 48b, 48b') has the form of the arc of a circle subtending an angle of 90°.

4. The extrusion head (1) according to any one of the preceding claims, **characterized in that** said plunger (20) is connected to a stem (25), which axially traverses said force plug (3), to be actuated in translation by an actuator (26) set in the top part of said extrusion head (1).

5. The extrusion head (1) according to any one of the preceding claims, **characterized in that** said force plug (3) is mounted axially translatable within said body (2) of the head to pass from a raised, working, position, in which said annular gap (10, 10') formed between the bottom part (30) of the force plug and the die opening (6) is kept open, and a lowered, resting, position, in which said annular gap (10, 10') formed between the bottom part (30) of the force plug and the die opening (6) is closed.

6. The extrusion head (1) according to any one of the preceding claims, **characterized in that** said die opening comprises a bottom part (8), which has a tapered inner side surface (11) with a radius that decreases downwards, and **in that** said bottom part (30) of the force plug comprises a tapered outer side surface (31) with a diameter that decreases downwards so as to generate a restriction (10') of said annular gap (10) for passage of the molten plastic material.

7. A method for controlling the thickness of the walls of a parison coming out of an extrusion head (1) according to any one of the preceding claims, the method comprising the following steps:
- feeding of the molten material into the extrusion head (1); and
- lowering of a plunger (20) supporting an ovalizing insert (40) having a substantially, annular shape and its bottom edge (48) is asymmetrical, presenting portions with convex profile (48a, 48a') and portions with concave profile (48b, 48b'), set in a chamber (32) made in the bottom part (30) of the force plug (3) of the extrusion head, so that the asymmetrical bottom edge (48) of the ovalizing insert (40) projects at the bottom with respect to the bottom edge (38) of said bottom part (30) of the force plug, to ovalize the internal part of the parison coming out of said extrusion head.

## Patentansprüche

1. Extrusionskopf (1) zum Blasformen von Hohlkörpern, umfassend:
- einen Körper (2), der in seinem Inneren eine im Wesentlichen zylindrische Kammer definiert,
- einen Pressstempel (3), der eine im Wesentlichen zylindrische Form aufweist und axial innerhalb der zylindrischen Kammer des Körpers zum Definieren eines zylindrischen Spalts (4) zwischen der Außenseitenfläche des Pressstempels und der Innenseite des Körpers eingerichtet ist, durch den das geschmolzene Kunststoffmaterial, das von einem Extruder zugeführt ist, strömen kann;
- eine Blaskopföffnung (6), die am unteren Ende des Körpers (2) eingerichtet ist; und
- ein unteres Teil (30) des Pressstempels (3), das zum Definieren eines ringförmigen Spalts (10), der mit dem zylindrischen Spalt (4) zum Austritt des röhrenförmigen Vorformlings aus dem Extrusionskopf in Verbindung steht, innerhalb der Blaskopföffnung (6) eingerichtet ist,
wobei der Extrusionskopf **dadurch gekennzeichnet ist, dass** er Folgendes umfasst:
- einen Kolben (20), der an der Unterseite einen unrund werdenden Einsatz (40) stützt, der eine im Wesentlichen ringförmige Form und eine asymmetrische Unterkante (48) aufweist, die Abschnitte mit konvexem Profil (48a, 48a') und Abschnitte mit konkavem Profil (48b, 48b') aufweist, wobei der Kolben derart verschiebbar axial innerhalb einer Kammer (32), die in dem unteren Teil (30) des Pressstempels ausgebildet und nach unten offen ist, angebracht ist, dass der Kolben aus einer eingezogenen Ruhestellung, in der sich die Unterkante (48) des unrund werdenden Einsatzes innerhalb der Kammer (32) des unteren Teils des Pressstempels befindet, in eine ausgefahrene Arbeitsstellung übergehen kann, in der die Unterkante (48) des unrund werdenden Einsatzes an der Unterseite bezüglich der Unterkante (38) des unteren Teils des Pressstempels vorragt.

2. Extrusionskopf (1) nach Anspruch 1, **dadurch gekennzeichnet, dass** der unrund werdende Einsatz (40) zwei Abschnitte mit konvexem Profil (48a, 48a'), die in diametral gegenüberliegenden Positionen angeordnet sind, und zwei Abschnitte mit konkavem Profil (48b, 48b') aufweist, die in diametral gegenüberliegenden Positionen angeordnet sind.

3. Extrusionskopf (1) nach Anspruch 2, **dadurch gekennzeichnet, dass** jeder der Abschnitte mit konvexem und konkavem Profil (48a, 48a', 48b, 48b') die Form eines Kreisbogens aufweist, der einem Winkel von 90° gegenüberliegt.

4. Extrusionskopf (1) nach einem der vorhergehenden Ansprüche, **dadurch gekennzeichnet, dass** der Kolben (20) mit einem Schaft (25) verbunden ist, der den Pressstempel (3) zur Verschiebungsbetätigung durch ein Stellglied (26), das im oberen Teil des Extrusionskopfs (1) eingerichtet ist, axial durchquert.

5. Extrusionskopf (1) nach einem der vorhergehenden Ansprüche, **dadurch gekennzeichnet, dass** der Pressstempel (3) axial verschiebbar innerhalb des Körpers (2) des Kopfs zum Übergehen aus einer angehobenen Arbeitsstellung, in der der ringförmige Spalt (10, 10'), welcher zwischen dem unteren Teil (30) des Pressstempels und der Blaskopföffnung (6) ausgebildet ist, offen gehalten ist, in eine abgesenkte Ruhestellung, in der der ringförmige Spalt (10, 10'), welcher zwischen dem unteren Teil (30) des Pressstempels und der Blasknpföffnung (6) ausgebildet ist, geschlossen ist, angeordnet ist.

6. Extrusionskopf (1) nach einem der vorhergehenden Ansprüche, **dadurch gekennzeichnet, dass** die Blaskopfäffnung ein unteres Teil (8) umfasst, das eine sich verjüngende Innenseitenfläche (11) mit einem Radius aufweist, der nach unten hin abnimmt, und dass das untere Teil (30) des Pressstempels eine sich verjüngende Außenseitenfläche (31) mit einem Durchmesser umfasst, der nach unten hin abnimmt, um eine Einengung (10') des ringförmigen Spalts 10) für den Durchgang des geschmolzenen Kunststoffmaterials zu erzeugen.

7. Verfahren zum Steuern der Wanddicke eines Vorformlings, der aus einem Extrusionskopf (1) nach einem der vorhergehenden Ansprüche kommt, das Verfahren die folgenden Schritte umfassend:
Zuführen des geschmolzenen Kunststoffmaterials in den Extrusionskopf (1); und
- Absenken eines Kolbens (20), der einen unrund werdenden Einsatz (40) stützt, der eine im Wesentlichen ringförmige Form und eine asymmetrische Unterkante (48) aufweist, die Abschnitte mit konvexem Profil (48a, 48a') und Abschnitte mit konkavem Profil (48b, 48b') aufweist, der derart in einer Kammer (32) eingerichtet ist, die in dem unteren Teil (30) des Pressstempels (3) des Extrusionskopfs hergestellt ist, dass die asymmetrische Unterkante (48) des unrund werdenden Einsatzes (40) an der Unterseite bezüglich der Unterkante (38) des unteren Teils (30) des Pressstempels vorragt, um das Innenteil des Vorformlings, der aus dem Extrusionskopf kommt, unrund zu machen.

## Revendications

1. Tête d'extrusion (1) pour moulage par soufflage d'objets creux comprenant :
- un objet (2) définissant à l'intérieur de celui-ci une chambre essentiellement cylindrique ;
- une prise de force (3) ayant une forme essentiellement cylindrique et placée axialement à l'intérieur de ladite chambre cylindrique de l'objet de manière à définir un espace cylindrique (4) entre la surface latérale extérieure de la prise de force et la surface latérale intérieure de l'objet, à travers lequel le matériau de plastique fondu alimenté par une extrudeuse peut s'écouler ;
- une ouverture de moule (6) placée à l'extrémité inférieure de l'objet (2) ; et
- une partie inférieure (30) de la prise de force (3) placée entre ladite ouverture de moule (6) de manière à définir un espace annulaire (10) communiquant avec ledit espace cylindrique (4) pour la sortie de la paraison tubulaire de ladite tête d'extrusion, ladite tête d'extrusion étant **caractérisée en ce qu'**elle comprend :
- un plongeur (20) soutenant sur le fond un insert ovalisant (40) présentait une forme essentiellement annulaire et son bord inférieur (48) est asymmétrique, présentant des parties avec un profil convexe (48a, 48a') et des parties avec un profil concave (48b, 48b'), ledit plongeur étant monté de manière coulissante axialement à l'intérieur d'une chambre (32) formée dans ladite partie inférieure (30) de la prise de force et ouverte vers le bas de telle façon que ledit plongeur peut passer d'une position rétractée, de repos, dans laquelle le bord inférieur (48) de l'insert ovalisant se trouve à l'intérieur de la chambre (32) de la partie inférieure de la prise de force, à une position étendue, de travail, dans laquelle le bord inférieur (48) de l'insert ovalisant fait saillie sur le fond par rapport au bord inférieur (38) de ladite partie inférieure de la prise de force.

2. Tête d'extrusion (1) selon la revendication 1, **caractérisée en ce que** ledit insert ovalisant (40) présente deux parties avec un profil convexe (48a, 48a') agencées dans des positions diamétralement opposées et deux parties avec un profil concave (48b, 48b') agencées dans des positions diamétralement opposées.

3. Tête d'extrusion (1) selon la revendication 2, **caractérisée en ce que** chacune desdites parties avec des profils convexes et concaves (48a, 48a', 48b, 48b') a la forme d'un arc de cercle sous-tendant un angle de 90°.

4. Tête d'extrusion (1) selon l'une quelconque des revendication précédentes, **caractérisée en ce que** ledit plongeur (20) est relié à un arbre (25) qui traverse axialement ladite prise de force (3), destiné à être actionné en translation par un actionneur (26) placé dans la partie supérieure de ladite tête d'extrusion (1).

5. Tête d'extrusion (1) selon l'une quelconque des revendication précédentes, **caractérisée en ce que** ladite prise de force (3) est montée de manière à pouvoir être axialement translatée à l'intérieur dudit objet (2) de la tête pour passer d'une position relevée, de travail, dans laquelle ledit espace annulaire (10, 10') formé entre la partie inférieure (30) de la prise de force et l'ouverture de moule (6) est maintenue ouvert, et une position abaissée, de repos, dans laquelle ledit espace annulaire (10, 10') formé entre la partie inférieure (30) de la prise de force et l'ouverture de moule (6) est fermé.

6. Tête d'extrusion (1) selon l'une quelconque des revendication précédentes, **caractérisée en ce que** ladite ouverture de moule comprend une partie inférieure (8) qui présente une surface latérale intérieure (11) conique avec un angle qui décroît vers le bas, et **en ce que** ladite partie inférieure (30) de la prise de force comprend une surface latérale extérieure (31) conique avec un diamètre qui baisse vers le bas de façon à générer une restriction (10') dudit espace annulaire (10) pour le passage du matériau plastique moulé.

7. Procédé de contrôle de l'épaisseur de paroi d'une paraison sortant d'une tête d'extrusion (1) selon l'une quelconque des revendication précédentes, le procédé comprenant les étapes suivantes :
- alimentation du matériau fondu dans la tête d'extrusion (1) ; et
- abaissement d'un plongeur (20) supportant un insert ovalisant (40) présentant une forme essentiellement annulaire et son bord inférieur (48) est asymmétrique, présentant des parties avec un profil convexe (48a, 48a') et des parties avec un profil concave (48b, 48b'), monté dans une chambre (32) réalisée dans la partie inférieure (30) de la prise de force (3) de la tête d'extrusion, de façon à ce que le bord inférieur (48) asymmétrique de l'insert ovalisant (40) faisse saillie sur le fond par rapport au bord inférieur (38) de ladite partie inférieure (30) de la prise de force pour ovaliser la partie intérieure de la paraison sortant de ladite tête d'extrusion,
